# EUROPEAN PATENT APPLICATION

(11) **EP 1 221 645 A2**
(43) Date of publication of application: **10.07.2002**
(21) Application number: 01310697.6
(22) Date of filing: 20.12.2001
(51) Int. Cl.: G06F 1/32

(54) **Portable computing device having a low power media player**

(30) Priority: 03.01.2001 US 755553
(71) Applicant: Hewlett-Packard Company, Palo Alto, CA 94304 (US)
(72) Inventor: howard, Gary M., Corvallis, OR 97330 (US)
(74) Representative: Jackson, Richard Eric

(57) **Abstract**

A portable computing device includes a first processor which reads audio files from an internal or external storage media and stores the audio files in a random access memory element. After the audio files are stored, the first processor enters a low-power mode while a secondary processor reads the audio files from the random access memory element and presents the audio to a user. Occasionally, the first processor is brought out of the low-power mode in order to read new audio files from the storage media and store these in the random access memory element, thereby allowing the user to listen to the new audio.

## Description

### BACKGROUND OF THE INVENTION

The invention relates generally to the field of computing devices and, more particularly, to the use of multimedia devices in portable computing devices.

As portable computing devices, such as laptop computers, incorporate greater and greater multimedia functionality, users of these devices increasingly depend on this functionality to provide entertainment. Thus, as users take advantage of the multimedia capability of computing devices, these devices require greater battery capacity in order to provide power to the additional multimedia devices. However, increases in battery capacity generally necessitate increases in the overall size and weight of the portable computing device. As the size and weight of the portable computing device increases, the desirability of using the device as a "portable" begins to decrease.

In a typical architecture of a portable computing device, the use of a multimedia player requires operation of nearly the entire computing device. Therefore, when a user is playing music by way of a compact disc player, for example, the central processing unit of the portable computing device must be operational and active. Further, if the portable computing device incorporates a mass storage capability, such as an internal disk drive, this unit must also remain active. Requiring these functions to be fully operational at all times places severe demands on battery capacity. Therefore, it is highly desirable for portable computing to devices to incorporate a low-power media player. This would allow users to take advantage of the multimedia capabilities of the portable computing device without requiring the device to significantly increase in size and weight due to an increase in battery size.

### SUMMARY OF THE INVENTION

According to one aspect of the invention, a portable computing device makes use of a first processor, which is used to provide most of the functionality of the portable computing device, and a second processor which is used to read audio files from an random access memory and present these to the user. In this mode of operation, the first processor, as well as the internal hard drive of the portable computer unit, are placed into state which consumes very little power. This allows the portable computer unit to be used as an audio player for extended periods of time.

According to another aspect of the invention, video information can be stored in a random access memory element and read by way of a second processor while the first processor and any associated internal disk drives are placed in a low-power state.

The invention is pointed out with particularity in the appended claims. However, a more complete understanding of the various aspects of the invention may be acquired by reading the description herein, in conjunction with the figures, wherein like reference numerals refer to like elements.

### BRIEF DESCRIPTION OF THE DRAWINGS

Fig. 1 is a block diagram of a portable computing device having a low power media player in accordance with a preferred embodiment of the invention;
Fig. 2 is a block diagram of a method of operating a portable computing device having a low power media player in accordance with a preferred embodiment of the invention.

### DETAILED DESCRIPTION OF THE PREFERRED EMBODIMENTS

A portable computing device having a low power media player enables a user to play multimedia files, such as audio and video, using a secondary processor which is functionally separated from the central processing unit of the portable computing device. This enables the user to play multimedia files for a longer period of time than is currently possible without requiring an increase in the size and weight of the associated battery or other stored energy supply module. In a preferred embodiment of the invention, many functions of the portable computing device are placed in a special low-power mode while the secondary processor is used to read multimedia files from a random access memory element without requiring operation of either the central processing unit or an internal disk drive of the portable computing device.

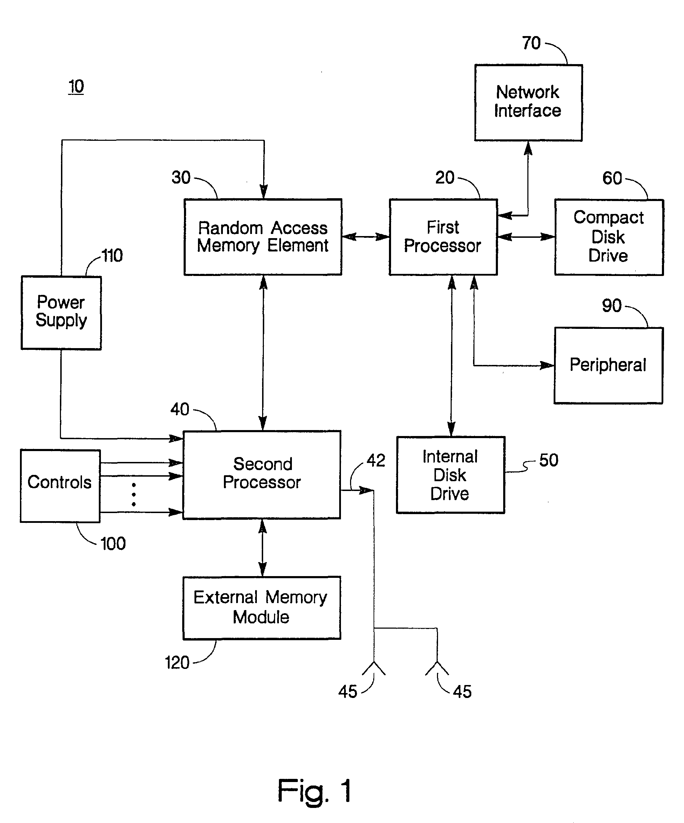

Fig. 1 is a block diagram of a portable computing device (10) having a low power media player in accordance with a preferred embodiment of the invention. In Fig. 1, first processor 20 and second processor 40 are at least functionally separated from each other, and may be physically separated as well. Thus, first processor 20 performs many general-purpose functions which define the operations of the portable computing device. Therefore, first processor 20 may be an Intel processor or other suitable central processing unit used in conventional portable computing devices. Preferably, first processor 20 has access to primary power from power supply 110, as well as access to random access memory element 30. Additionally, first processor 20 desirably includes interfaces to network interface 70, internal disk drive 50, and compact disc drive 60. Further, first processor 20 may also have access to peripheral 90, which represents an external memory element such as a ZIP drive, or other external memory storage element.

As previously mentioned, second processor 40 is at least functionally separate from first processor 20. In a preferred embodiment, this functional separation may be achieved by way of the use of distinct processor modules represented by first and second processors 20 and 40, respectively, or may be achieved by way of a single processor which is partitioned in order to allow execution of only a subset of functions during specific modes of operation. In either case, both first and second processors 20 and 40 are capable of accessing random access memory element 30. In the case of first processor 20, this includes the capability to both read and write to random access memory element 30, while second processor 40 need only include a capability to read data from random access memory element 30. Preferably, first processor 20 is capable of communicating with internal disk drive 50, peripheral 90, compact disc drive 60, and network interface 70. Network interface 70 may include a suitable modem that enables access to a network such as the Internet.

In a preferred embodiment, second processor 40 performs only a subset of the operations performed by first processor 20, and therefore places reduced power consumption demands on power supply 110. Second processor 40 can be an MP3 player or other type of digital audio player which converts a first digital representation of audio to an analog format which can be conveyed along an electrical conductor for conversion to acoustic energy. Additionally, second processor 40 and first processor 20 maintain a coherency interface with each other in order to coordinate reading and writing functions to random access memory element 30, and to perform other low-level coordination and timing tasks.

Second processor 40 can also include an interface to external memory module 120 which may be a removable memory cartridge, such as those compliant with Personal Computer Memory Card International Association (PCMCIA) externally removable memory card. Further, second processor 40 desirably incorporates an interface to controls 100 which allow direct control over the operations of second processor 40 by the user of portable computing device 10.

In a preferred embodiment, portable computing device 10 functions to allow a user to play music using second processor 40 while requiring a substantially reduced amount of energy from power supply 110. This feature is accomplished by first directing first processor 20 to access one or one or more of internal disk drive 50, compact disc drive 60, peripheral 90, and network interface 70 in order to read a digital representation of audio from the selected storage media. These digital representations can include those used in conventional compact disc players. First processor 20 then reformats the digital representation of this audio into a format such as MP3 for storage into random access memory element 30. When first processor 20 has reformatted a substantial amount of digital audio and placed the reformatted digital audio into random access memory element 30, a computer program which influences the operation of first processor 20 commands the processor to reduce, or perhaps even to bring to a halt, the operations of the processor as well as the operations of internal disk drive 50. The program may also reduce operations of several other elements of portable computing device 10 in order to reduce the demands on power supply 110.

During this period of reduced operation of first processor 20, second processor 40 can read the digital representation of audio from random access memory element 30 and format this representation into an analog audio format. Second processor 40 can transmit this through output 42 and on to speakers 45. In this manner, second processor 40 is the principal consumer of electrical energy from power supply 110 while first processor 20 operates in a sleep mode. Therefore, with few other functional elements of portable computing device 10 operating at full capacity, the energy provided by power supply 110 can be made to last for a much longer period of time. During this time, second processor 40 reads digital representations of audio from random access memory element 30 and plays them to the user of portable computing device 10 through speakers 45. Although not shown in FIG. 1, the analog audio can also be conveyed to an external output for use with a headset or other device used to present audio to a user. This can include an entertainment system where the analog audio is further manipulated or amplified and presented to the user.

As an example which is not intended to limit the invention in any way, if the chosen format of the digital representation of audio is MP3, an audio file which requires 50 Megabytes of space on a compact disc drive 60 can be reformatted to require only about 5 Megabytes using MP3. This 5-megabyte file can then be stored into random access memory element 30 and can provide about 5 minutes of analog audio.

Preferably, second processor 40 incorporates inputs for controls 100. This allows the user of portable computing device 10 to directly influence the operations of second processor 40. As an example, which is not intended to be limiting in any way, controls 100 may include a selector which instructs second processor 40 to communicate with first processor 20 so that the first processor can read an initial set of audio files from one of internal disk drive 50, peripheral 90, compact disc drive 60, and network interface 70. When one or more of these devices is accessed, first processor 20 can then reformat new audio files from one ore more of the aforementioned devices and store them into random access memory element 30. When this task is completed, first processor 20 can return to a low power mode. Second processor 40 can then access the new audio files from random access memory element 30 and make them available to the user of portable computing device 10 by way of speakers 45.

Alternatively, second processor 40 can be programmed to periodically reinitiate the operations of first processor 20 so that the first processor can ensure that new audio files are periodically stored in random access memory element 30. To bring this about, first processor 20 is awakened only occasionally in order to update the contents of random access memory element 30, thereby ensuring that new material is constantly available to the user. Second processor 40 can be further programmed to provide an indication of the audio file currently being played through a text display (which is not shown in FIG 1.) This can allow the track number or a brief title to be presented to the user by way of a low-power display, such as a liquid crystal.

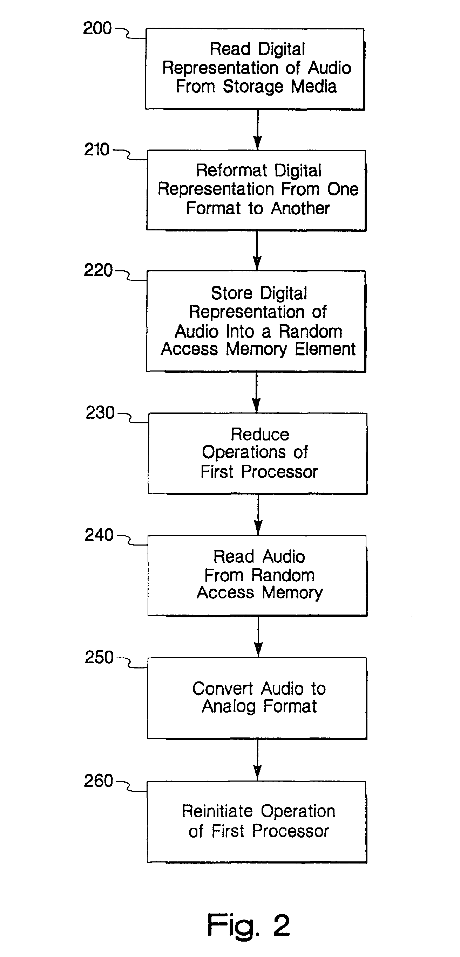

Fig. 2 is a block diagram of a method of operating a portable computing device having a low power media player in accordance with a preferred embodiment of the invention. The apparatus shown in figure 1 is suitable for carrying out the method of Fig. 2, with blocks 200 through 230 being preferably performed by a first processor. In order to cause the portable computing device of Fig. 1 to perform the method of Fig. 2, is it anticipated that a program storage device readable by the portable computing device of Fig. 1 should tangibly embody a program of instructions executable by a first and second processor in order to perform a method which directs the portable computing device to enter a low-power sleep mode and present audio to a user. This program storage media can be embodied in a computer diskette, compact disc, or could be downloaded from site on the World Wide Web.

According to the method of Fig. 2, at block 200 a digital representation of audio is read from a storage media. This storage media can include a peripheral device (such as a ZIP drive or other external mass storage device) compact disc player, network interface, or internal disk drive. At block 210 the digital representation of the audio is reformatted to a second format that makes efficient use of memory but maintains adequate sound quality, such as MP3. At block 220, the first processor stores the digital representation of audio into a random access memory element.

At block 230, the operations of the first processor are reduced in order to reduce the power consumption demands of the first processor on a power supply. At block 240, audio files are read from random access memory, by a secondary processor, which is at least functionally separated from the first processor. At block 250, these digital representations of audio are converted to an analog audio format and converted to sound by way of at least one speaker or other type of transducer. At block 260, operation of the first processor is reinitiated in order to refresh the memory of a random access memory element with new audio files. The method can then return to block 200 so that additional audio files can be read from a storage medium by the first processor.

Although the portable computing device of Fig. 1 and the related method of Fig. 2 are primarily directed toward presenting audio to the user, the present invention is not limited to audio. In an alternate embodiment (not shown), a first processor accesses a storage device in order to read video information from the storage device, such as a digital videodisc player. The first processor then stores, into a random access memory element, a digital representation of the video. The operations of the first processor are then reduced and a second processor reading the digital representation of the video from the random access memory element and converts the video to a format which can be viewed by a user, such as MPEG. In this alternative embodiment, it is anticipated that the first processor is a general-purpose processor which provides the bulk of the functionality of the personal computing device, and the second processor provides those functions related to the processing and display of video to the user without requiring substantial functionality of the first processor. The operation of the first processor can then be occasionally reinitiated in order load additional video into the random access memory element from the storage element.

In conclusion, a portable computing device having a low power media player enables a user to play multimedia files, such as audio and video, using a secondary processor which is functionally separated from the central processing unit of the portable computing device. This enables the user to play multimedia files for a longer period of time than is currently possible without requiring an increase in the size and weight of the associated battery or other stored energy supply module. In a preferred embodiment of the invention, many functions of the portable computing device are placed in a special low-power mode while the secondary processor is used to read multimedia files from a random access memory element without requiring operation of either the central processing unit or an internal disk drive of the portable computing device.

The foregoing description of the specific embodiments will so fully reveal the general nature of the invention that others can, by applying current knowledge, readily modify and/or adapt for various applications such specific embodiments without departing from the generic concept, and therefore such adaptations and modifications should and are intended to be comprehended within the meaning and range of equivalents of the disclosed embodiments.

It should be understood that the phraseology or terminology employed herein is for the purpose of description and not of limitation. Accordingly, the invention is intended to embrace all such alternatives, modifications, equivalents and variations as fall within the spirit and broad scope of the appended claims.

## Claims

1. A portable computing device (10) which is capable of transmitting audio while operating in a low power mode, comprising:
a first processor (20) for storing a digital representation of said audio into a random access memory element (30);
an input to said first processor (10) for receiving a sleep command, said sleep command serving to permit said first processor (20) to enter a low power consumption mode; and
a second processor (40) for reading said representation of said audio from said random access memory element (30) and converting said representation of said audio into analog audio information.

2. The portable computing device (10) of claim 1, further comprising a storage disk which stores said digital representation of said audio on a storage media.

3. The portable computing device (10) of claim 2, wherein said storage media is an optical media.

4. The portable computing device (10) of claim 3, wherein said first processor (20) includes a converter which converts said digital representation of said audio from a first format to a second format prior to storing said digital representation of said audio into said random access memory element (30).

5. The portable computing device (10) of claim 3 wherein said second format is MP3.

6. The portable computing device (10) of claim 1, wherein said first processor additionally receives a second command which causes said first processor (20) to exit said low power consumption mode.

7. The portable computing device (10) of claim 1 further comprising a network interface (70) for supplying a digital representation of said audio to said first processor (20).

8. The portable computing device (10) of claim 7, wherein said network interface (70) is adapted for use with the Internet.

9. The portable computing device (10) of claim 1 further comprising a PCMCIA interface for supplying a digital representation of said audio to said first processor (20).

10. The portable computing device (10) of claim 1 further comprising a selector for commanding said first processor (20) to store additional digital representations of audio into said random access memory element (30).
